# EUROPÄISCHE PATENTSCHRIFT

(11) **EP 3 953 715 B1**
(45) Veröffentlichungstag und Bekanntmachung des Hinweises auf die Patenterteilung: **13.09.2023**
(21) Anmeldenummer: 20713567.4
(22) Anmeldetag: 20.03.2020
(51) Int. Cl.: G01P 3/48, H02P 7/00, H02P 6/00

(54) **VERFAHREN ZUR ERMITTLUNG EINER DREHZAHL EINES ELEKTRONISCH KOMMUTIERTEN ELEKTROMOTORS**
METHOD FOR DETERMINING A SPEED OF AN ELECTRONICALLY COMMUTATED ELECTRIC MOTOR
PROCÉDÉ POUR DÉTERMINER UN RÉGIME D'UN MOTEUR ÉLECTRIQUE À COMMUTATION ÉLECTRONIQUE

(30) Priorität: 12.04.2019 DE 102019205312
(43) Veröffentlichungstag der Anmeldung: 16.02.2022
(73) Patentinhaber: AUDI AG, 85045 Ingolstadt (DE)
(72) Erfinder: BARTH, Karsten, 09120 Chemnitz (DE)
(86) Internationale Anmeldenummer: PCT/EP2020/057730
(87) Internationale Veröffentlichungsnummer: WO 2020/207756

(56) Entgegenhaltungen:
- DE-A1- 10 028 033
- DE-C1- 19 729 238
- DE-C1- 19 807 253
- US-A- 5 524 168

## Beschreibung

Insbesondere in Kraftfahrzeugen ist die robuste Kühlung bestimmter Komponenten mit Lüftern potentiell hochrelevant für einen Betrieb der entsprechenden Komponenten. Werden beispielsweise zwei Bordnetze mit unterschiedlichen Spannungen, beispielsweise ein 12 Volt-Netz und ein 48 Volt-Netz über einen DC/DC-Wandler verbunden, ist es typischerweise zumindest in manchen Betriebssituationen erforderlich, diesen zu kühlen. Hierbei soll vorzugsweise robust erkannt werden, ob der Lüfter funktionsfähig ist.

Eine einfache Diagnosemöglichkeit ist es, zu prüfen, ob der Lüfter bei einem Betrieb Strom aufnimmt. Hierdurch kann beispielsweise erkannt werden, ob der Lüfter korrekt verbaut ist. Soll jedoch eine umfassende On-Board-Diagnose möglich sein, kann dies nicht ausreichend sein. Beispielsweise kann ein blockierter Lüfter Strom aufnehmen und dennoch nicht kühlend wirken.

Um eine Drehzahlüberwachung eines Lüfters durchzuführen ist es bekannt, ein Tachosignal des Lüfters über eine entsprechende im Lüfter verbaute Sensorik und eine zusätzliche Leitung bereitzustellen. Da eine zusätzliche Leitung benötigt wird, kann der Lüfter nicht mehr auf übliche Weise angeschlossen werden beziehungsweise muss zusätzlich zur normalen Verdrahtung an eine Kommunikationsschnittstelle angeschlossen werden. Dies erhöht den Herstellungsaufwand des Fahrzeugs merklich.

Die Druckschrift DE 198 07 253 C1 offenbart eine Schaltungsanordnung zur Drehzahlerfassung von elektronisch kommutierten Lüftern. Hierbei werden Stromsteilheiten von durch den Lüfter auf seinen Stromversorgungsleitungen verursachten Stromschwankungen ausgewertet.

Die Druckschrift US 7 304 470 B2 schlägt vor, eine analoge Differenzierung und Filterung von Spannungen durchzuführen, die an einem in Serie zu einem Lüfter geschalteten Shunt-Widerstand abfallen. Das resultierende Signal wird in ein digitales Pulssignal umgesetzt und einem Frequenzzählermodul zugeführt, um eine Rotationsgeschwindigkeit des Lüfters zu ermitteln.

Die Druckschrift DE 100 28 033 A1 beschreibt eine Bestimmung der Drehgeschwindigkeit eines Gleichstrommotors durch eine Auswertung der Frequenz der Stromrippel im Ankerstromsignal.

Die im Stand der Technik beschriebene Differenzierung und Pulsformung von an Shunt-Widerständen abfallenden Spannungen führen einerseits zu einem relativ großen Schaltungsaufwand. Andererseits resultiert aus der Flankendetektion beziehungsweise der Auswertung von differenzierten Signalen eine starke Empfindlichkeit der Messung für hochfrequente Störsignale. Diese können insbesondere dann auftreten, wenn zur Versorgung des Lüfters ein DC/DC-Wandler mit hoher Schaltfrequenz genutzt wird.

Der Erfindung liegt somit die Aufgabe zugrunde, eine demgegenüber verbesserte Möglichkeit zur Ermittlung einer Drehzahl eines elektronisch kommutierten Elektromotors anzugeben, die insbesondere unempfindlicher gegenüber hochfrequenten Störungen ist und somit insbesondere auch dann eine robuste Drehzahlerfassung ermöglicht, wenn der Elektromotor über einen hochfrequent schaltenden DC/DC-Wandler versorgt wird.

Die Aufgabe wird erfindungsgemäß durch ein Verfahren nach Anspruch gelöst, wobei zu mehreren Zeitpunkten Strommesswerte erfasst werden, die eine Stromstärke eines dem Motor zugeführten Antriebsstroms beschreiben, wonach in Abhängigkeit der erfassten Strommesswerte eine Drehzahl des Motors ermittelt wird.

Es wird somit vorgeschlagen, nicht die Zeitableitung einer Stromstärke beziehungsweise einer die Stromstärke beschreibenden Messgröße auszuwerten, sondern die Stromstärke beziehungsweise entsprechende Strommesswerte direkt zu erfassen. Die Erfassung einer Zeitableitung einer Stromstärke beziehungsweise eines entsprechenden Strommesswertes wäre nicht geeignet, die Stromstärke eines dem Motor zugeführten Antriebsstroms zu beschreiben, da diese einen Gleichstromanteil nicht korrekt beschreiben kann. Da die Strommesswerte unmittelbar die Stromstärke und nicht eine Zeitableitung der Stromstärke beschreiben, wird die vorangehend beschriebene Verstärkung hochfrequenter Frequenzanteile und somit insbesondere von Störsignalen, die beispielsweise durch hochfrequent schaltende DC/DC-Wandler verursacht werden können, vermieden. Zugleich kann durch die Erfassung von Strommesswerten, die unmittelbar die Stromstärke des Motors beschreiben, wie später noch genauer erläutert werden wird, ein besonders einfacher Schaltungsaufbau erzielt werden. Die Erfassung der Strom messwerten kann insbesondere mit relativ hohen Abtastraten, also beispielsweise wenigstens mit der fünffachen oder wenigstens mit der zehnfachen Rate der Frequenz der elektronischen Kommutierung des Elektromotors erfolgen. Strommesswerte können beispielsweise mit einer Auflösung von acht Bit oder sechzehn Bit erfasst werden.

Das erfindungsgemäße Verfahren kann insbesondere im Rahmen eines Diagnoseverfahrens durchgeführt werden, um einen Elektromotor beziehungsweise einen Lüfter zu diagnostizieren. Insbesondere kann das Diagnoseverfahren dazu verwendet werden, eine Blockade des Motors beziehungsweise Lüfters zu erkennen. Beispielsweise kann erkannt werden, dass die Drehzahl bei einer Bestromung längere Zeit bei Null oder sehr niedrigen Wert, insbesondere unterhalb eines Grenzwertes, verharrt, und in diesem Fall kann eine entsprechende Störnachricht an ein Diagnosegerät gesendet werden oder Ähnliches.

Die Drehzahl des Elektromotors kann in Abhängigkeit davon ermittelt werden, welche der erfassten Strommesswerte einen vorgegebenen Grenzwert erreichen oder unterschreiten. Bei einer elektronischen Kommutierung eines Elektromotors werden typischerweise kurzfristig alle Phasen getrennt. Bei einer ausreichend hohen Bandbreite der Erfassung, also insbesondere bei einer ausreichend hochfrequenten Analog-Digital-Wandlung und einer Nutzung von ausreichend breiten Filtern im Erfassungspfad, könnte somit prinzipiell der Zeitpunkt erkannt werden, an dem kein Strom fließt und somit eindeutig auch der Zeitpunkt der Kommutierung. Da typischerweise die erreichbare Bandbreite und Wandlerrate begrenzt sind und/oder das Signal rauschbeaufschlagt ist, wird typischerweise auch bei einem Schalten der Kommutierung des Elektromotors kein Strommesswert gemessen werden, der dem Stromfluss von Null entspricht. Daher wird vorzugsweise ein Grenzwert etwas oberhalb des Strom messwertes gewählt, der einem Stromfluss von Null entspricht, so dass tatsächlich alle Kommutierungen des Elektromotors erkannt werden können. Beispielsweise kann der Grenzwert so gewählt werden, dass er durch den Strommesswert unterschritten wird, wenn die Stromstärke des Antriebsstroms unter 10 %, unter 30 %, unter 50 % oder unter 70 % einer durchschnittlichen Stromstärke fällt.

Die Drehzahl des Elektromotors kann in Abhängigkeit davon ermittelt werden, zu welchen Zeitpunkten und/oder in welchem Zeitabstand Strommesswerte erfasst werden, die den oder einen vorgegebenen Grenzwert erreichen oder unterschreiten. Beispielsweise kann ein Zähler jedes Mal ausgelesen und zurückgesetzt werden, wenn der Grenzwert unterschritten wird, um einen Zeitabstand entsprechender Strommesswerte zu erfassen. Der Zählerwert ist in diesem Fall proportional zur Periode einer Kommutation des Elektromotors, also umgekehrt proportional zur Kommutationsfrequenz und somit auch zur Drehzahl des Elektromotors. Um ein weniger rauschbehaftetes Drehzahlsignal zu erhalten kann beispielsweise eine Mittelwertbildung, eine Mediawahl oder Ähnliches für die gemessenen Zeitabstände beziehungsweise die ermittelten Frequenzen durchgeführt werden.

Erfindungsgemäß wird der Antriebsstrom durch eine Treiberschaltung in Form eines Gleichspannungswandlers bereitgestellt wobei die Treiberschaltung einen Ausgang für eine zu dem Antriebsstrom proportionale Messspannung bereitstellt, wobei die Spannungswerte dieser Messspannung als Strommesswerte erfasst werden. Die Treiberschaltung kann insbesondere schaltbar sein, um den Elektromotor bedarfsgerecht zu aktivieren beziehungsweise zu deaktivieren. Der Gleichspannungswandler stellt eine bestimmte oder variable Betriebsspannung für den Elektromotor bereit.

Die einfachste Art eine zum Antriebsstrom proportionale Messspannung bereitzustellen, ist es, innerhalb der Treiberschaltung einen Shunt-Widerstand zu nutzen, über den der Antriebsstrom geführt wird. Da dies zu zusätzlichen Verlustleistungen führen kann, wird erfindungsgemäß stattdessen ein separater Messpfad genutzt. Es ist bekannt, in Gleichspannungswandlern ein RC-Glied, also eine Serienschaltung von Widerstand und Kondensator, parallel zu einer im Rahmen der Gleichspannungswandlung genutzten Spule zu schalten. Durch entsprechende Abstimmung des RC-Gliedes auf die Impedanz der Spule kann erreicht werden, dass am Kondensator eine Spannung abfällt, die proportional zum durch den Gleichspannungswandler bereitgestellten Strom ist. Ein entsprechendes Vorgehen ist prinzipiell im Stand der Technik bekannt und soll daher nicht detailliert erläutert werden. Durch entsprechende Wahl des Widerstands und des Kondensators des RC-Gliedes wird effektiv eine Filterung realisiert. Hierbei kann die Wahl in der im erfindungsgemäßen Verfahren genutzten Treiberschaltung derart erfolgen, dass zwar die im Gleichspannungswandler genutzten Schaltungsfrequenzen gefiltert werden, die typischerweise deutlich niedrigeren Frequenzen, mit denen der Elektromotor kommutiert wird und somit der Strom aufgrund der Kommutierung des Elektromotors schwankt, jedoch im Wesentlichen ungedämpft erfasst werden können.

Die Strommesswerte können durch einen Analog-Digital-Wandler erfasst werden. Hierbei können die Spannungswerte direkt oder nach einer Tiefpassfilterung erfasst werden, wobei eine relative breitbandige Erfassung gewünscht ist. Beispielsweise kann die Grenzfrequenz der Erfassung bei mehreren 10 kHz oder bei mehreren 100 kHz sein. Die Abtastrate des Analog-Digital-Wandlers sollte wenigstens doppelt so hoch gewählt werden wie die Grenzfrequenz. Eine Filterung vor der Wandlung kann beispielsweise durch einen in viele Analog-Digital-Wandler ohnehin integrierten Antialiasing-Filter des Wandlers erfolgen. Insbesondere wird die Grenzfrequenz so gewählt, dass sie größer, insbesondere wenigstens um den Faktor fünf, zehn, oder zwanzig größer, als die maximale erwartete Kommutierfrequenz des Elektromotors ist.

Der Elektromotor kann einen Lüfter antreiben, der eine Komponente kühlt, die ein Gleichspannungswandler oder ein Gleichrichter oder ein Wechselrichter ist und/oder die eine Verarbeitungseinrichtung ist oder umfasst, die dazu eingerichtet ist, die Drehzahl oder eine von der Drehzahl abhängende Information zu ermitteln. Wie eingangs erläutert ist es bei Gleichspannungswandlern, Gleichrichtern beziehungsweise Wechselrichtern, insbesondere in Kraftfahrzeugen oder anderen Vorrichtungen, in denen relativ große Ströme umgesetzt werden, häufiger erforderlich diese zu kühlen, wobei Störungen an dieser Kühlung robust erkannt werden sollten. Hierzu kann die erfindungsgemäße Drehzahlerkennung wie erläutert genutzt werden. Gleichspannungswandler, Gleichrichter beziehungsweise Wechselrichter umfassen häufig ohnehin eine Verarbeitungseinrichtung, beispielsweise einen Mikrocontroller, um beispielsweise bereitgestellte Spannungen und/oder Ströme zu steuern oder zu regeln. Da hierbei ohnehin häufig eine Überwachung der abgegebenen Stromstärke möglich ist, kann das erfindungsgemäße Verfahren bereits durch eine geringfügige Anpassung der Programmierung der entsprechenden Verarbeitungseinrichtung und optional durch einen Austausch eines, beispielsweise IC-extern implementierten, Filters für die Stromerfassung erreicht werden. Die Verarbeitungseinrichtung kann die erfasste Drehzahl beispielsweise ausschließlich intern verarbeiten, beispielsweise sie mit einem Grenzwert vergleichen und bei Unterschreitung des Grenzwertes oder bei Unterschreitung des Grenzwertes für ein vorgegebenes Zeitintervall ein entsprechendes Hinweissignal an eine externe Einrichtung, beispielsweise eine Steuereinrichtung der Vorrichtung beziehungsweise des Kraftfahrzeugs, senden. Hierdurch kann die externe Einrichtung unmittelbar über eine Störung des Betriebs des Lüfters, insbesondere über eine Blockade des Lüfters, informiert werden.

Neben dem erfindungsgemäßen Verfahren betrifft die Erfindung eine Vorrichtung, insbesondere ein Kraftfahrzeug, gemäß Anspruch 6.

Die zum Verfahren erläuterten Merkmale und Einzelheiten können mit den dort genannten Vorteilen auf die erfindungsgemäße Vorrichtung übertragen werden und umgekehrt.

Der Elektromotor kann einen Lüfter antreiben, wobei die Vorrichtung wenigstens eine durch den Lüfter gekühlte Komponente umfasst, die ein Gleichspannungswandler oder ein Gleichrichter oder ein Wechselrichter ist und/oder die die Verarbeitungseinrichtung umfasst. Dies wurde bereits obig erläutert. Insbesondere in Kraftfahrzeugen werden durch die genannten Komponenten häufig große Energiemengen umgesetzt, womit eine robuste Kühlung erforderlich ist und Störungen dieser Kühlung robust erkannt werden sollen. Beispielsweise kann ein Gleichspannungswandler in einem Kraftfahrzeug ein Niederspannungsbordnetz mit einem Hochspannungsbordnetz verbinden. Es kann beispielsweise ein 12 Volt-Bordnetz und ein 48 Volt-Bordnetz im Kraftfahrzeug vorgesehen sein, in denen jeweils Teile der elektronischen Komponenten vorhanden sind. Um diese beiden Bordnetze miteinander zu verbinden und beispielsweise ein Laden einer Batterie in einem der Bordnetze mit Energie aus dem anderen der Bordnetze zu ermöglichen oder Ähnliches kann ein Gleichspannungswandler vorgesehen sein, der wie erläutert durch einen Lüfter gekühlt werden kann. Ein Ausfall eines Lüfters soll robust erkannt werden, da ein Überhitzen eines solchen Gleichspannungswandlers leicht zu Fehlfunktionen beziehungsweise Beschädigungen im Fahrzeug führen kann. Daher ist die erläuterte Drehzahlüberwachung in diesem Fall besonders vorteilhaft.

Die Verarbeitungseinrichtung kann dazu eingerichtet sein, eine Diagnoseinformation an eine Diagnoseeinrichtung der Vorrichtung oder eine vorrichtungsexterne Diagnoseeinrichtung bereitzustellen, die die Funktionsfähigkeit des oder eines durch den Elektromotor angetriebenen Lüfters betrifft und die von der ermittelten Drehzahl abhängt. Beispielsweise kann die Diagnoseinformation davon abhängen, ob die Drehzahl bei einer Bestromung des Elektromotors einen vorgegebenen Drehzahlgrenzwert überschreitet beziehungsweise ob ein solcher Grenzwert für ein Zeitintervall, das ein Zeitgrenzwert überschreitet, unterschritten wird. Somit kann erkannt werden, ob der Lüfter blockiert ist. Falls dies der Fall ist, kann durch die Diagnoseeinrichtung beispielsweise ein Warnhinweis an einen Nutzer der Vorrichtung ausgegeben werden, ein Notbetrieb der Vorrichtung genutzt werden, bei dem beispielsweise ein Gleichspannungswandler, Gleichrichter oder Wechselrichter nicht mehr oder mit geänderter Parametrisierung genutzt wird oder Ähnliches. Hierdurch kann beispielsweise eine Überhitzung entsprechender Komponenten vermieden werden.

Weitere Vorteile und Einzelheiten der Erfindung zeigen die folgenden Ausführungsbeispiele sowie die zugehörigen Zeichnungen. Hierbei zeigen schematisch:
- Fig. 1: ein Ausführungsbeispiel einer erfindungsgemäßen Vorrichtung, nämlich eines Kraftfahrzeugs, die beziehungsweise das dazu eingerichtet ist, ein Ausführungsbeispiel des erfindungsgemäßen Verfahrens durchzuführen,
- Fig. 2: eine Detailansicht der in Fig. 1 gezeigten Vorrichtung, und
- Fig. 3: den zeitlichen Verlauf von im Rahmen des Ausführungsbeispiels des erfindungsgemäßen Verfahrens erfassten Strommesswerten.

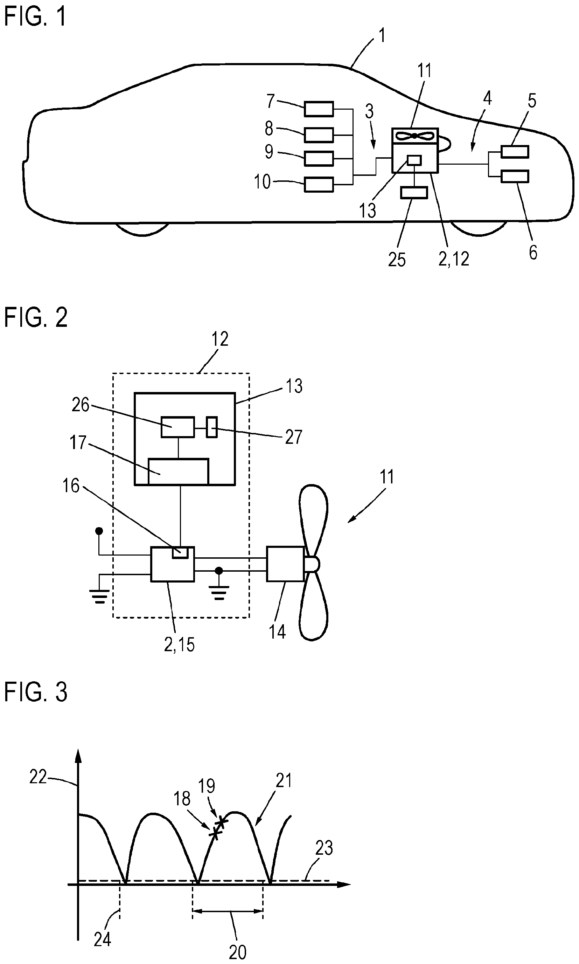

Fig. 1 zeigt eine Vorrichtung 1, im konkreten Beispiel ein Kraftfahrzeug, die einen Gleichspannungswandler 2 umfasst, um zwei Fahrzeugnetze 3, 4 mit unterschiedlichen Gleichspannungen miteinander zu verbinden. Beispielsweise kann das Fahrzeugnetz 4 ein 48-Volt-Netz oder ein Hochspannungsnetz sein, das im gezeigten Beispiel eine Batterie 5 und einen Startergenerator 6 umfasst. Das Fahrzeugnetz 3 kann ein Niederspannungsnetz, beispielsweise ein 12-Volt-Netz, sein, das eine weitere Batterie 7 und weitere Niederspannungskomponenten, beispielsweise eine Lichtanlage 8, Fahrassistenzsysteme 9 und ein Multimediasystem 10, umfasst. Aufgrund der Verbindung der Fahrzeugnetze 3, 4 über den Gleichspannungswandler 2 kann Energie zwischen diesen Fahrzeugnetzen 3, 4 transportiert werden, beispielsweise um die Batterie 7 über den Startergenerator 6 zu laden beziehungsweise das Kraftfahrzeug mit Energie der Batterie 7 zu starten, Energie zwischen den Batterien 5, 7 auszutauschen oder Ähnliches.

Obwohl Gleichspannungswandler mittlerweile sehr hohe Effizienten erreichen, ist es typischerweise erforderlich, entsprechende Komponenten 12, also den Gleichspannungswandler 2, aktiv zu kühlen. Hierzu umfasst das Kraftfahrzeug einen Lüfter 11, der ebenfalls durch den Gleichspannungswandler 2 gespeist wird. Ein Ausfall bzw. eine Blockade des Lüfters 11 soll erkannt werden, um beispielsweise durch eine entsprechende Anpassung des Betrieb des Gleichspannungswandlers 2 bzw. durch ein vorübergehendes Unterbinden des Energieaustausches zwischen den Fahrzeugnetzen 3, 4 eine Überhitzung in diesem Fall zu vermeiden. Hierzu ist in die zu kühlende Komponente 12 eine Verarbeitungseinrichtung 13 integriert, die die Drehzahl eines in Fig. 1 nicht gezeigten Elektromotors des Lüfters 11 überwacht. Das hierzu genutzte Verfahren und weitere diesbezüglich relevante Komponenten werden im Folgenden detailliert mit Bezug auf die Figuren 2 und 3 erläutert werden.

Wie in Fig. 2 schematisch dargestellt ist, wird der Elektromotor 14 des Lüfters 11 über den Gleichspannungswandler 2 versorgt, der somit als Treiberschaltung 15 für den Elektromotor 14 dient. Es ist bekannt, dass entsprechende Gleichspannungswandler 2 bzw. Treiberschaltungen 15 Ausgänge 16 aufweisen können, die eine Spannung bereitstellen, die proportional zu einem durch den Gleichspannungswandler 2 bzw. die Treiberschaltungen 15 bereitgestellten Strom ist. Dies wird durch ein RC-Glied erreicht, das parallel zu einer aktiven Spule des Gleichspannungswandlers 2 geschaltet ist, an dessen Kondensator eine entsprechende Spannung abfällt. Dieses Vorgehen ist prinzipiell im Stand der Technik bekannt und soll daher nicht detailliert erläutert werden. Ein solches RC-Glied kann in die Treiberschaltung 15 integriert sein oder separat von dieser ausgebildet sein. Durch entsprechende Wahl des Widerstands- bzw. Kapazitätswertes kann erreicht werden, dass die hochfrequenten Schaltfrequenzen des Gleichspannungswandlers 2 gefiltert werden, wobei gleichzeitig Änderungen des Stroms aufgrund der elektronischen Kommutierung des Elektromotors 14, bei der der Stromfluss zum Motor jeweils kurz unterbrochen wird, erkannt werden können.

Die Spannungen werden einem Analog-Digital-Wandler 17 zugeführt, um digitale Strommesswerte zu erfassen. Wie in Fig. 3 dargestellt ist, wird die Abtastrate des Analog-Digital-Wandlers 17 so gewählt, dass der zeitliche Abstand zwischen der Erfassung zweier aufeinanderfolgender Strommesswerte 18, 19 erheblich geringer ist als der Zeitabstand zweier erwarteter Kommutierungen des Elektromotors 14 des Lüfters 11. Hierdurch kann der zeitliche Verlauf 21 der Strommesswerte 18, 19 mit ausreichender Zeitauflösung erfasst werden, dass erkannt wird, dass der Strom 22 zu den Zeitpunkten, an den eine Kommutierung erfolgt, im Wesentlichen auf Null fällt.

Um den zeitlichen Verlauf 21 der Strommesswerte 18, 19 auszuwerten und eine Drehzahl bzw. Kommutationsfrequenz des Elektromotors zu ermitteln, werden die Strommesswerte 18, 19 mit einem Grenzwert 23 verglichen, um zu erkennen, welche der Strommesswerte 18, 19 unterhalb des Grenzwerts 23 liegen bzw. zu welchen Zeitpunkten 24 der Strom 22 unter den Grenzwert 23 fällt. Der Zeitabstand 20 zwischen zwei solchen Zeitpunkten 24 kann beispielsweise dadurch ermittelt werden, dass ein interner Zähler der Verarbeitungseinrichtung 13 jedes Mal bei Unterschreitung des Grenzwertes 23 ausgelesen und zurückgesetzt wird. Somit kann der Zeitabstand 20 zwischen zwei Unterschreitungen des Grenzwertes 23 und somit der Zeitabstand zwischen zwei Kommutierungen des Elektromotors ermittelt werden. Da bekannt ist, wie viele Kommutierungen des Elektromotors bei jeder Umdrehung des Elektromotors erfolgen, kann aus dem Kehrwert dieses Zeitabstands 20 leicht die Drehzahl des Elektromotors errechnet werden.

Die beschriebene Ermittlung der Drehzahl kann beispielsweise durch einen Prozessor 26 der Verarbeitungseinrichtung 13 implementiert werden, der ein in einem Speicher 27 abgelegtes entsprechendes Programm ausführt.

Wie eingangs erläutert, soll die beschriebene Drehzahlerfassung primär dazu dienen, zu erkennen, ob der Lüfter 11 blockiert ist. Die Verarbeitungseinrichtung 13 ist somit insbesondere dazu eingerichtet, zu erkennen, ob eine ermittelte Drehzahl unter einen vorgegebenen Grenzwert fällt bzw. für ein vorgegebenes Zeitintervall unterhalb dieses Grenzwerts bleibt. Eine diesbezügliche Information kann an eine separate Diagnoseeinrichtung 25 bereitgestellt werden, um eine Onbord-Diagnose in der Vorrichtung 1, also im Kraftfahrzeug, zu ermöglichen. Dies kann ausschließlich dazu dienen, entsprechende Hinweise beispielsweise an einen Benutzer des Kraftfahrzeugs auszugeben, entsprechende Informationen in einen Fehlerspeicher zu schreiben oder Ähnliches. Es ist jedoch auch möglich, den Betrieb des Gleichspannungswandlers 2 in Abhängigkeit dieser Diagnoseinformation anzupassen, beispielsweise einen Energietransfer zwischen den Fahrzeugnetzen 3, 4 einzuschränken oder vollständig zu blockieren, falls erkannt wird, dass der Lüfter 11 blockiert ist oder aus anderen Gründen zu niedrige Drehzahlen erfasst werden.

## Patentansprüche

1. Verfahren zur Ermittlung einer Drehzahl eines elektronisch kommutierten Elektromotors (14), insbesondere eines Elektromotors (14) eines Lüfters (11), wobei zu mehreren Zeitpunkten Strommesswerte (18, 19) erfasst werden, die eine Stromstärke (22) eines dem Elektromotor (14) zugeführten Antriebsstromes beschreiben, wonach in Abhängigkeit der erfassten Strommesswerte (18, 19) eine Drehzahl des Elektromotors (14) ermittelt wird, wobei der Antriebsstrom durch eine Treiberschaltung (15) bereitgestellt wird, wobei die Treiberschaltung (15) einen Ausgang (16) für eine zu dem Antriebsstrom proportionale Messspannung bereitstellt, wobei Spannungswerte dieser Messspannung als Strommesswerte (18, 19) erfasst werden, wobei die Treiberschaltung (15) ein Gleichspannungswandler ist, in dem eine Serienschaltung von einem Widerstand und einem Kondensator parallel zu einer im Rahmen der Gleichspannungswandlung genutzten Spule geschaltet und so auf die Impedanz der Spule abgestimmt ist, dass am Kondensator die Messspannung abfällt, die proportional zum durch den Gleichspannungswandler bereitgestellten Strom ist.

2. Verfahren nach Anspruch 1,
**dadurch gekennzeichnet,**
**dass** die Drehzahl des Elektromotors (14) in Abhängigkeit davon ermittelt wird, welche der erfassten Strommesswerte (18, 19) einen vorgegebenen Grenzwert (23) erreichen oder unterschreiten.

3. Verfahren nach Anspruch 1 oder 2,
**dadurch gekennzeichnet,**
**dass** die Drehzahl des Elektromotors (14) in Abhängigkeit davon ermittelt wird, zu welchen Zeitpunkten (24) und/oder in welchem Zeitabstand (20) Strommesswerte (18, 19) erfasst werden, die den oder einen vorgegebenen Grenzwert (23) erreichen oder unterschreiten.

4. Verfahren nach einem der vorangehenden Ansprüche,
**dadurch gekennzeichnet,**
**dass** die Strommesswerte (18, 19) durch einen Analog-Digital-Wandler (17) erfasst werden.

5. Verfahren nach einem der vorangehenden Ansprüche,
**dadurch gekennzeichnet,**
**dass** der Elektromotor (14) einen Lüfter (11) antreibt, der eine Komponente (12) kühlt, die ein Gleichspannungswandler (2) oder ein Gleichrichter oder ein Wechselrichter ist und/oder die eine Verarbeitungseinrichtung (13) ist oder umfasst, die dazu eingerichtet ist, die Drehzahl oder eine von der Drehzahl abhängende Information zu ermitteln.

6. Vorrichtung, insbesondere Kraftfahrzeug, umfassend einen elektronisch kommutierten Elektromotor (14), insbesondere einen Elektromotor (14) eines Lüfters (11), eine Verarbeitungseinrichtung (13) sowie eine Treiberschaltung (15), welche dazu eingerichtet ist, dem Elektromotor (14) einen Antriebsstrom bereitzustellen, wobei die Treiberschaltung (15) einen Ausgang (16) für eine zu dem Antriebsstrom proportionale Messspannung bereitstellt, wobei die Treiberschaltung (15) ein Gleichspannungswandler ist, in dem eine Serienschaltung von einem derstand und einem Kondensator parallel zu einer im Rahmen der Gleichspannungswandlung genutzten Spule geschaltet und so auf die Impedanz der Spule abgestimmt ist, dass am Kondensator die Messspannung abfällt, die proportional zum durch den Gleichspannungswandler bereitgestellten Strom ist, wobei die die Verarbeitungseinrichtung (13) dazu eingerichtet ist, die Drehzahl des Elektromotors (14) gemäß dem Verfahren nach einem der vorangehenden Ansprüche zu ermitteln, wobei Spannungswerte dieser Messspannung als Strommesswerte (18, 19) erfasst werden.

7. Vorrichtung nach Anspruch 6,
**dadurch gekennzeichnet,**
**dass** der Elektromotor (14) einen Lüfter (11) der Vorrichtung (1) antreibt, wobei die Vorrichtung (1) wenigstens eine durch den Lüfter (11) gekühlte Komponente (12) umfasst, die ein Gleichspannungswandler (2) oder ein Gleichrichter oder ein Wechselrichter ist und/oder die die Verarbeitungseinrichtung (13) umfasst.

8. Vorrichtung nach Anspruch 6 oder 7,
**dadurch gekennzeichnet,**
**dass** die Verarbeitungseinrichtung (13) dazu eingerichtet ist, eine Diagnoseinformation an eine Diagnoseeinrichtung (25) der Vorrichtung (1) oder eine vorrichtungsexterne Diagnoseeinrichtung bereitzustellen, die die Funktionsfähigkeit des oder eines durch den Elektromotor (14) angetriebenen Lüfters (11) betrifft und die von der ermittelten Drehzahl abhängt.

## Claims

1. Method for determining a speed of an electronically commutated electric motor (14), in particular an electric motor (14) for a fan (11),
wherein current measurement values (18, 19) are detected at multiple points in time, which describe an amperage (22) of a drive current supplied to the electric motor (14), and a speed of the electric motor (14) is subsequently determined on the basis of the detected current measurement values (18, 19), wherein the drive current is provided by a drive circuit (15), wherein the drive circuit (15) provides an output (16) for a measuring voltage proportional to the drive current, wherein voltage values of this measuring voltage are detected as current measurement values (18, 19), wherein the drive circuit (15) is a DC-DC converter, in which a series connection of a resistor and a capacitor is connected in parallel to a coil used as part of DC-DC voltage conversion and is adapted to the impedance of the coil, such that the measuring voltage at the capacitor, which is proportional to the power provided by the DC-DC converter, decreases.

2. Method according to claim 1,
**characterised in that**
the speed of the electric motor (14) is determined on the basis of the detected current measurement values (18, 19) reaching or falling below a predetermined threshold value (23).

3. Method according to claim 1 or 2,
**characterised in that**
the speed of the electric motor (14) is determined on the basis of the point in time (24) at which and/or the time interval (20) at which current measurement values (18, 19), which reach or fall below the or a predetermined threshold value (23), are detected.

4. Method according to any of the preceding claims,
**characterised in that**
the current measurement values (18, 19) are detected by an analog-to-digital converter (17).

5. Method according to any of the preceding claims,
**characterised in that**
the electric motor (14) drives a fan (11), which cools a component (12), which is a DC-DC converter (2) or a rectifier or an inverter and/or that is or comprises a processing device (13), which is designed to determine the speed or information based on the speed.

6. Device, in particular a motor vehicle, comprising an electronically commutated electric motor (14), in particular an electric motor (14) for a fan (11), a processing device (13) as well as a drive circuit (15), which is designed to provide the electric motor (14) with a drive current, wherein the drive circuit (15) provides an output (16) for a measuring voltage proportional to the drive current, wherein the drive circuit (15) is a DC-DC converter, in which a series connection of a resistor and a capacitor is connected in parallel to a coil used as part of DC-DC voltage conversion and is adapted to the impedance of the coil, such that the measuring voltage at the capacitor, which is proportional to the power provided by the DC-DC converter, decreases, wherein the processing device (13) is designed to determine the speed of the electric motor (14) according to the method according to any of the preceding claims, wherein voltage values of this measuring voltage are detected as current measurement values (18, 19).

7. Device according to claim 6,
**characterised in that**
the electric motor (14) drives a fan (11) for the device (1), wherein the device (1) comprises at least one component (12) cooled by the fan (11), which is a DC-DC converter (2) or a rectifier or an inverter and/or that comprises the processing device (13).

8. Device according to claim 6 or 7,
**characterised in that**
the processing device (13) is designed to provide diagnostic information to a diagnostic unit (25) of the device (1) or a diagnostic unit external to the device, which relates to the proper functioning of the or a fan (11) driven by the electric motor (14) and which is based on the determined speed.

## Revendications

1. Procédé pour déterminer une vitesse de rotation d'un moteur électrique (14) à commutation électronique, en particulier d'un moteur électrique (14) d'un ventilateur (11),
dans lequel des valeurs de mesure de courant (18, 19) sont détectées à plusieurs moments, qui décrivent une intensité de courant (22) d'un courant d'entraînement amené au moteur électrique (14), après quoi une vitesse de rotation du moteur électrique (14) est déterminée en fonction des valeurs de mesure de courant détectées (18, 19), dans lequel le courant d'entraînement est fourni par un circuit d'attaque (15), dans lequel le circuit d'attaque (15) fournit une sortie (16) pour une tension de mesure proportionnelle au courant d'entraînement, dans lequel des valeurs de tension de cette tension de mesure sont détectées en tant que valeurs de mesure de courant (18, 19), dans lequel le circuit d'attaque (15) est un convertisseur de courant continu dans lequel un montage en série d'une résistance et d'un condensateur est monté en parallèle à une bobine utilisée dans le cadre de la conversion de tension continue et est adapté à l'impédance de la bobine de sorte que la tension de mesure au niveau du condensateur, qui est proportionnelle au courant fourni par le convertisseur de tension continue, diminue.

2. Procédé selon la revendication 1,
**caractérisé en ce que**
la vitesse de rotation du moteur électrique (14) est déterminée en fonction des valeurs de mesure de courant (18, 19) détectées qui atteignent ou sont inférieures à une valeur limite prédéterminée (23).

3. Procédé selon la revendication 1 ou 2,
**caractérisé en ce que**
la vitesse de rotation du moteur électrique (14) est déterminée en fonction des moments (24) et/ou de l'intervalle de temps (20) auxquels des valeurs de mesure de courant (18, 19) sont détectées qui atteignent ou sont inférieures à la ou à une valeur limite prédéterminée (23).

4. Procédé selon l'une quelconque des revendications précédentes,
**caractérisé en ce que**
les valeurs de mesure de courant (18, 19) sont détectées par un convertisseur analogique-numérique (17).

5. Procédé selon l'une quelconque des revendications précédentes,
**caractérisé en ce que**
le moteur électrique (14) entraîne un ventilateur (11) qui refroidit un composant (12), qui est un convertisseur de courant continu (2) ou un redresseur ou un onduleur et/ou qui est ou comprend un dispositif de traitement (13) qui est configuré pour déterminer la vitesse de rotation ou une information dépendant de la vitesse de rotation.

6. Dispositif, en particulier véhicule automobile, comprenant un moteur électrique (14) à commutation électronique, en particulier un moteur électrique (14) d'un ventilateur (11), un dispositif de traitement (13) ainsi qu'un circuit d'attaque (15), lequel est configuré pour fournir un courant d'entraînement au moteur électrique (14), dans lequel le circuit d'attaque (15) fournit une sortie (16) pour une tension de mesure proportionnelle au courant d'entraînement, dans lequel le circuit d'attaque (15) est un convertisseur de tension continue, dans lequel un montage en série d'une résistance et d'un condensateur est monté en parallèle à une bobine utilisée dans le cadre de la conversion de tension continue et est adapté à l'impédance de la bobine de sorte que la tension de mesure au niveau du condensateur, qui est proportionnelle au courant fourni par le convertisseur de tension continue, diminue, dans lequel le dispositif de traitement (13) est configuré pour déterminer la vitesse de rotation du moteur électrique (14) conformément au procédé selon l'une quelconque des revendications précédentes, dans lequel des valeurs de tension de cette tension de mesure sont détectées en tant que valeurs de mesure de courant (18, 19).

7. Dispositif selon la revendication 6,
**caractérisé en ce que**
le moteur électrique (14) entraîne un ventilateur (11) du dispositif (1), dans lequel le dispositif (1) comprend au moins un composant (12) refroidi par le ventilateur (11), qui est un convertisseur de courant continu (2) ou un redresseur ou un onduleur et/ou qui comprend le dispositif de traitement (13).

8. Dispositif selon la revendication 6 ou 7,
**caractérisé en ce que**
le dispositif de traitement (13) est configuré pour fournir une information de diagnostic à un dispositif de diagnostic (25) du dispositif (1) ou à un dispositif de diagnostic externe au dispositif, qui concerne la fonctionnalité du ou d'un ventilateur (11) entraîné par le moteur électrique (14) et qui dépend de la vitesse de rotation déterminée.
